# EUROPÄISCHE PATENTSCHRIFT

(11) **EP 1 145 897 B1**
(45) Veröffentlichungstag und Bekanntmachung des Hinweises auf die Patenterteilung: **07.05.2008**
(21) Anmeldenummer: 01105625.6
(22) Anmeldetag: 07.03.2001
(51) Int. Cl.: B60N 2/22

(54) **Getriebebeschlag für einen Fahrzeugsitz**
Fitting for an actuating mechanism of a vehicle seat
Ferrure pour le mécanisme de commande d'un siège de véhicule

(30) Priorität: 12.04.2000 DE 10018108
(43) Veröffentlichungstag der Anmeldung: 17.10.2001
(73) Patentinhaber: KEIPER GmbH & Co. KG, 67657 Kaiserslautern (DE)
(72) Erfinder: Teufel, Ingo, 67806 Rockenhausen (DE)
(74) Vertreter: Patentanwälte Hosenthien-Held und Dr. Held

(56) Entgegenhaltungen:
- EP-A- 0 332 340
- EP-A- 0 930 983
- WO-A-98/02329
- WO-A-98/15423
- DE-A- 19 527 374
- DE-A- 19 829 372
- GB-A- 2 229 910
- US-A- 4 832 405
- US-A- 5 611 747

## Beschreibung

Die Erfindung betrifft einen Getriebebeschlag für einen Fahrzeugsitzeinsteller mit den Merkmalen des Oberbegriffs des Anspruches 1.

Ein offenes Planetengetriebe (D-Getriebe) kann als Antrieb für einen Einsteller eines Fahrzeugsitzes verwendet werden, wobei ein unbetätigtes Getriebe als Sperre wirkt. Fertigungsbedingte Toleranzen der Bauteile können zu einem Spiel am Abtrieb führen. Bei gesperrtem Getriebe kann dieses Spiel Geräusche und unerwünschte Bewegungen im Fahrbetrieb verursachen. Andererseits ist zur Betätigung des Getriebes ein Mindestzahnflankenspiel nötig, um eine gleichmäßige Einstellung zu erhalten. Bei einem aus der DE 195 27 374 C2 bekannten Getriebebeschlag, der als Taumelbeschlag mit einem Beschlagoberteil als Zentralrad und einem Beschlagunterteil als Planetenrad ausgebildet ist, wird eine Keilschiebeeinrichtung vorgeschlagen. Mittels einer axialen Bewegung des Schiebers kann ein radiales Spiel zwischen den beiden Beschlagteilen beseitigt werden. Auf Getriebebeschläge, die für Fälle ohne Taumelbewegung eingesetzt werden, ist diese Lösung nicht einfach übertragbar, da durch die erhöhte Anzahl von Bauteilen zwischen mehreren Bauteilen das Spiel nicht gleichzeitig beseitigt werden kann. So wird in der EP 0 332 340 A1 die einen Getriebebeschlag gemäß dem Oberbegriff des Anspruchs 1 zeigt ein Beschlag der eingangs genannten Art mit kegelstumpfförmigen Zahnrädern vorgeschlagen.

Der Erfindung liegt daher die Aufgabe zu Grunde, einen Getriebebeschlag der eingangs genannten Art zu verbessern. Diese Aufgabe wird erfindungsgemäß durch einen Getriebebeschlag mit den Merkmalen des Anspruches 1 gelöst. Vorteilhafte Ausgestaltungen sind Gegenstand der Unteransprüche. Ein Fahrzeugsitz mit einem solchen Getriebebeschlag ist Gegenstand des Anspruches 8.

Die Keilschiebeeinrichtung wandelt im Falle einer Aktivierung eine axiale Kraft in eine radiale Kraft und eine axiale Verschiebung in eine radiale Verschiebung um. Mit derartigen, in radial unterschiedliche Richtungen wirkenden Mittel kann auch bei einem Getriebebeschlag mit mehr als zwei zueinander verdrehbaren Bauelementen in einem gesperrten Zustand des Getriebebeschlags eine radiale Spielfreistellung erreicht werden. Bei beispielsweise drei zueinander verdrehbaren Bauteilen kann mit diesen Mitteln, die vorzugsweise in radial entgegengesetzten Richtungen wirken, das radiale Spiel gleichzeitig zwischen dem Planetenrad und jeweils einem der beiden Hohlräder beseitigt werden. Vorzugsweise wird die radial unterschiedliche Wirkung durch eine axiale Bewegung der Mittel erzielt, beispielsweise mittels eines Zugankers. Mit einer solchen vereinfachten Konstruktion kann besser auf die im Inneren des Getriebebeschlags vorgesehenen Mittel eingewirkt werden, ohne dessen Schwenkfunktion zu beeinträchtigen.

Die Mittel können als Drehschiebegelenk ausgebildet sein, beispielsweise als ein axial verschiebbares Lager für die Zahnräder, um sowohl radial als auch axial wirken zu können. Dabei bilden die äußeren Mantelflächen der Lagerscheiben das Drehgelenk, während eine innere Kulissenführung für den Keil die Keilschiebeeinrichtung bildet.

Um die Kraft zur Beseitigung des Spiels aufzubringen, ist zur Bewegung der Mittel vorzugsweise ein Energiespeicher, beispielsweise eine Feder, vorgesehen. Um zwischen gesperrtem und betätigtem Zustand des Getriebebeschlags selektiv die Spielbeseitigung zu aktivieren bzw. zu deaktivieren, ist der Energiespeicher vorzugsweise abkoppelbar, wobei im Antrieb Steuerkurven zum Abkoppeln des Energiespeichers vorgesehen sind.

Der erfindungsgemäße Getriebebeschlag findet vorzugsweise bei einem Fahrzeugsitz Anwendung, insbesondere bei einem Kraftfahrzeugsitz, beispielsweise in einem Neigungseinsteller für die gesamte Sitzfläche (Sitzschale) oder für einen Teil der Sitzfläche, für die Rückenlehne und/oder die Kopfstütze oder in einem Höheneinsteller, insbesondere an Stellen, an denen Kräfte auftreten.

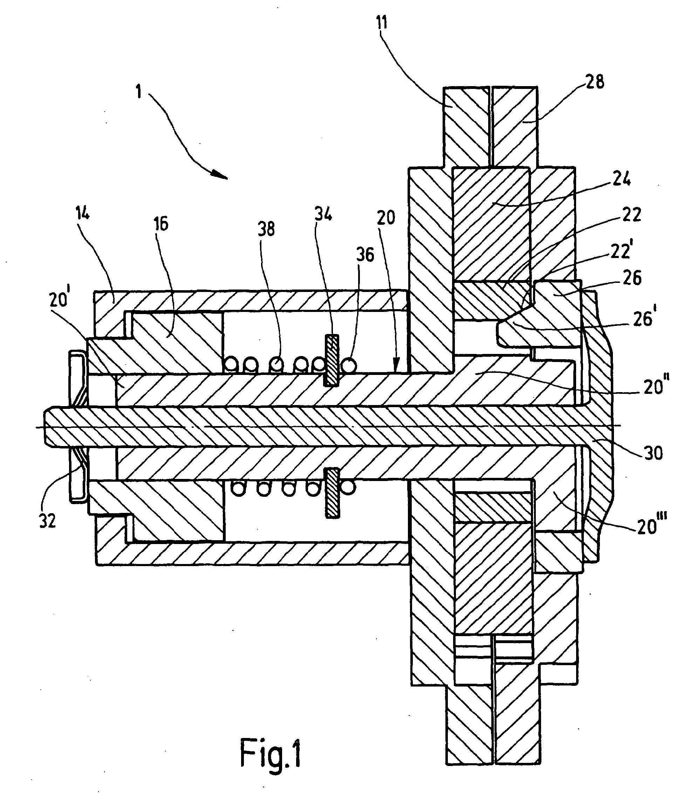

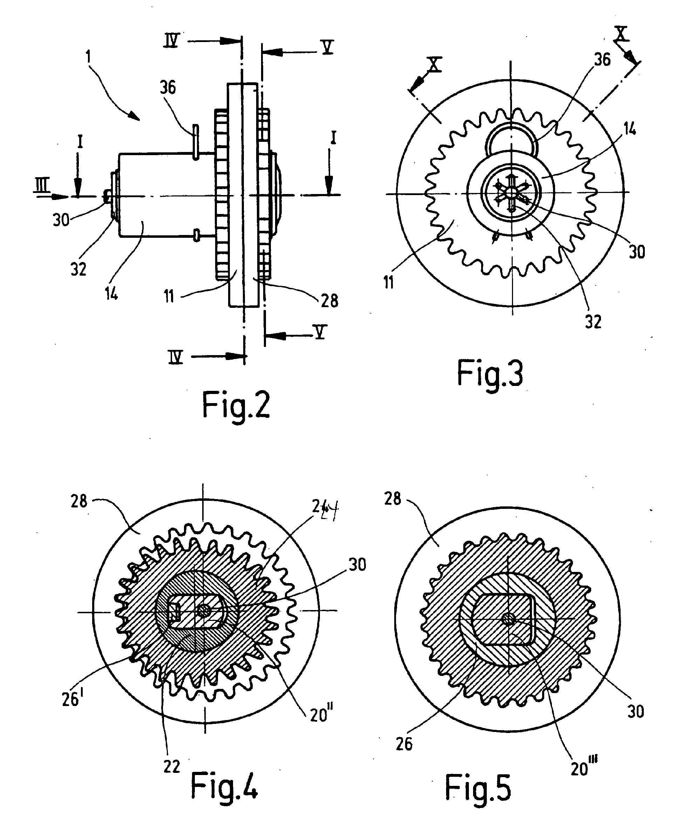

Im folgenden ist die Erfindung anhand eines in der Zeichnung dargestellten Ausführungsbeispiels näher erläutert. Es zeigen
- Fig. 1: einen Längsschnitt durch das im gesperrten Zustand befindliche Ausführungsbeispiel entlang der Linie I-I in Fig. 2,
- Fig. 2: eine Seitenansicht des Ausführungsbeispiels,
- Fig. 3: eine Stirnansicht des Ausführungsbeispiels in Richtung des Pfeiles III in Fig. 2,
- Fig. 4: einen Querschnitt durch das Ausführungsbeispiel entlang der Linie IV-IV in Fig. 2,
- Fig. 5: einen Querschnitt durch das Ausführungsbeispiel entlang der Linie V-V in Fig. 2,

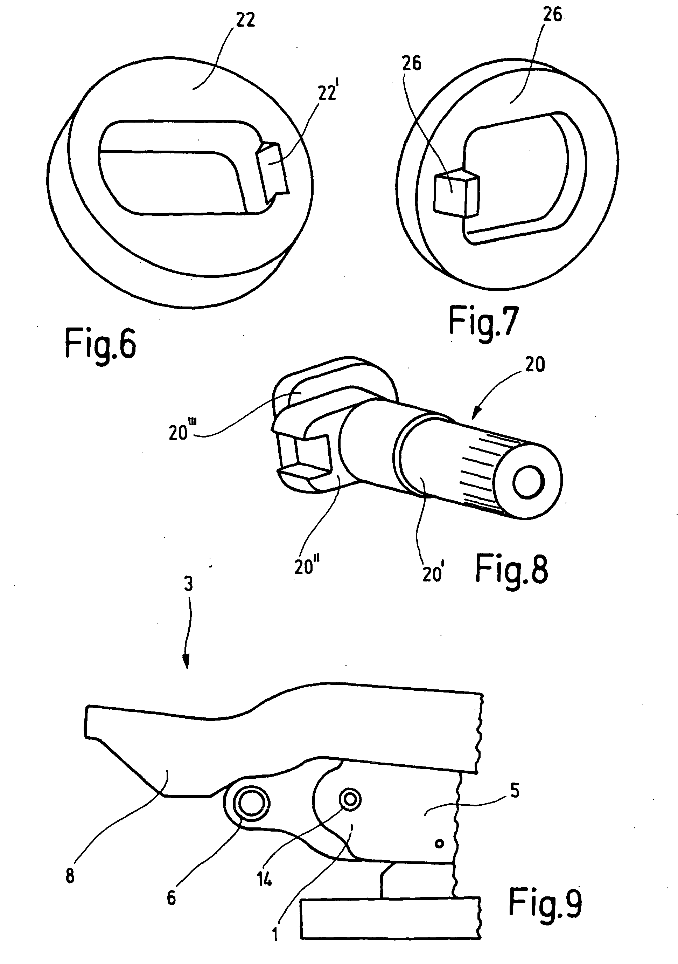

- Fig. 6: eine perspektivische Ansicht der Ritzel-Lagerscheibe,
- Fig. 7: eine perspektivische Ansicht der Hohlrad-Lagerscheibe,
- Fig. 8: eine perspektivische Ansicht des Exzenters,
- Fig. 9: eine nur teilweise dargestellte, schematische Seitenansicht eines Fahrzeugsitzes mit dem Ausführungsbeispiel,

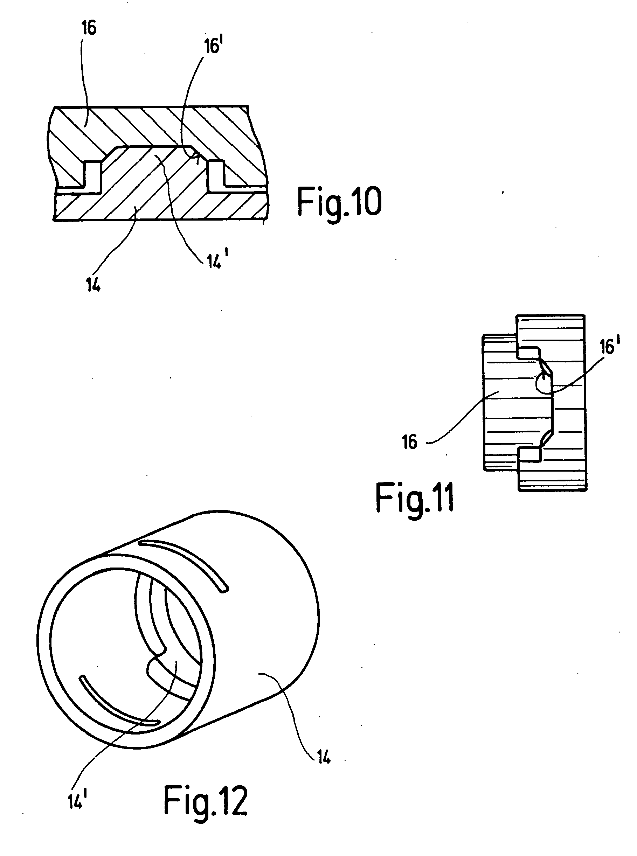

- Fig. 10: einen nur teilweise dargestellten Schnitt entlang der Linie X-X in Fig. 3,
- Fig. 11: eine Seitenansicht einer Freischalthülse, und
- Fig. 12: eine perspektivische Ansicht einer Antriebshülse.

Im Ausführungsbeispiel ist ein Getriebebeschlag 1, der als einfaches rückkehrendes Planetengetriebe ausgebildet ist, bei einem Fahrzeugsitz 3 für einen Neigungseinsteller der Sitzfläche vorgesehen. Beim Einbau in ein Sitzgestell des Fahrzeugsitzes 3 wird der Getriebebeschlag 1 auf einer der beiden Seiten des Fahrzeugsitzes 3 am vorderen Ende eines Sitzrahmens 5 angebracht, wobei die Schwenkachse horizontal angeordnet ist. Abtriebsseitig ist am Getriebebeschlag 1 über eine laschenförmige Schwinge eine zu einem Gelenk auf der anderen Seite des Fahrzeugsitzes 3 verlaufende, horizontale Stange 6 angebracht, auf welcher die Vorderkante einer Sitzschale 8 gelagert ist. Durch Betätigen des Getriebebeschlags 1 schwenkt dieser, so daß die Neigung der Sitzschale 8 relativ zum Fahrzeugsitz 3 eingestellt werden kann. Unbetätigt sperrt der Getriebebeschlag 1, so daß die eingestellte Neigung gehalten wird.

Der als D6-Getriebe ausgebildete Getriebebeschlag 1 weist zur Befestigung am Sitzrahmen 5 ein erstes, feststehendes Hohlrad 11 auf, dessen als Zentralrad wirkende Innenverzahnung in axialer Richtung zur Innenseite des Fahrzeugsitzes 3 weist, wenn der Getriebebeschlag 1 eingebaut wird. In axialer Richtung auf der Außenseite des feststehenden Hohlrades 11 ist konzentrisch zur Innenverzahnung des feststehenden Hohlrades 11 eine relativ zu diesem drehbare, antriebsseitige erste Steuerhülse, im folgenden als Antriebshülse 14 bezeichnet, von zylindrischer Grundform mit einer Stirnseite angeordnet. Ein nicht dargestelltes Handrad kann drehfest auf der Antriebshülse 14 angebracht werden. Innerhalb der Antriebshülse 14 ist eine kürzere zweite Steuerhülse, im folgenden als Freischalthülse 16 bezeichnet, von ebenfalls zylindrischer Grundform drehbar angeordnet. Die Freischalthülse 16 liegt mit ihrer Außenseite an der Innenseite der Antriebshülse 14 an. An ihrem axial äußeren Ende weist die Antriebshülse 14 auf ihrer Innenseite eine Steuerkurve auf, welche durch eine radial nach innen vorspringende und in axialer Richtung geeignet geformte Nockenpartie 14' gebildet wird. Die Freischalthülse 16 weist an ihrem entsprechenden Ende auf ihrer Außenseite ebenfalls eine Steuerkurve mit Anschlagfläche auf, welche durch eine radial nach innen zurückgesetzte und in axialer Richtung geeignet geformte Nockenpartie 16' gebildet wird.

Innerhalb der Freischalthülse 16 liegt eine Welle 20' eines Exzenters 20 an. Mittels einer Kerbverzahnung zwischen der Freischalthülse 16 und der Welle 20' ist die Freischalthülse 16 in Umfangsrichtung drehfest und in axialer Richtung beweglich relativ zur Welle 20'. Die konzentrisch zur Innenverzahnung des feststehenden Hohlrades 11 angeordnete Welle 20' erstreckt sich in axialer Richtung durch eine zentrale Bohrung im feststehenden Hohlrad 11 hindurch. Der Exzenter 20 weist in dem von der Kerbverzahnung abgewandten Endabschnitt auf der Welle 20' eine einstückig ausgebildete Exzenterpartie 20" und daran einstückig in axialer Richtung anschließend eine Lagerpartie 20"' auf. Auf der leicht rechteckförmig ausgebildeten Exzenterpartie 20" ist exzentrisch zur Welle 20' eine Ritzel-Lagerscheibe 22 angeordnet, welche drehfest mit dem Exzenter 20 verbunden ist. Auf der Ritzel-Lagerscheibe 22 ist drehbar ein Ritzel 24 als Planetenrad gelagert, welches parallel zum feststehenden Hohlrad 11 in der durch dessen Innenverzahnung definierten Vertiefung angeordnet ist, mit dieser Innenverzahnung in Eingriff steht und an ihr ablaufen kann. Die axiale Abmessung des Ritzels 24 ist etwa doppelt so groß wie diejenige der Innenverzahnung des feststehenden Hohlrades 11.

Auf der Lagerpartie 20''' ist drehfest eine Hohlrad-Lagerscheibe 26 konzentrisch zur Welle 20' gelagert. Auf der Hohlrad-Lagerscheibe 26 ist drehbar ein zweites, abtriebsseitiges Hohlrad 28 angeordnet, welches von den Abmessungen her weitgehend dem feststehenden Hohlrad 11 gleicht, mit dem es fluchtet. Die dem Ritzel 24 zugewandte Innenverzahnung des abtriebsseitigen Hohlrades 28 hat jedoch eine andere Zähneanzahl als diejenige des feststehenden Hohlrades 11. Die mit einer Aufnahme für die Lagerpartie 20''' versehene Hohlrad-Lagerscheibe 26 weist an einer Stelle neben der besagten Aufnahme einen Keil 26' auf, welcher als eine sich verjüngende prismatische Materialpartie ausgebildet ist, die von derjenigen Stirnseite axial vorspringt, welche der Ritzel-Lagerscheibe 22 zugewandt ist. Die schräge Fläche, welche die Verjüngung bewirkt, weist dabei zur Ritzel-Lagerscheibe 22. Die Ritzel-Lagerscheibe 22 weist an ihrer Aufnahme für die Exzenterpartie 20" eine vertiefte Schräge 22' auf, welche dem Keil 26' zugewandt ist und mit diesem zusammenwirken kann. Die Schräge 22' ist benachbart zu der radial äußersten Stelle der Exzenterpartie 20", welche eine Aussparung für den Keil 26' aufweist.

Ein Zuganker 30 mit einem zylindrischen Schaft und einem Teller an einem Ende ist von der Abtreibsseite her durch eine zentrale Bohrung der Welle 20' des Exzenters 20 geschoben, so daß der Teller des Zugankers 30 an der Hohlrad-Lagerscheibe 26 anliegt. An seinem anderen Ende ragt der Zuganker 30 ein Stück weit über die Welle 20' hinaus. Ein Schnellbefestiger 32 ist auf dieses Ende des Zugankers 30 aufgebracht und liegt an der Freischalthülse 16 an, welche in diesem Bereich durch eine Öffnung der Stirnwand der Antriebshülse 14 nach außen ragt.

In einem Bereich zwischen der Kerbverzahnung für die Freischalthülse 16 und dem Durchtritt durch das feststehende Hohlrad 11 ist auf die Welle 20' des Exzenters 20 eine Scheibe 34 gesteckt. Die Scheibe 34 mit kreisringförmiger Außenkontur ist hierfür U-förmig ausgeschnitten und mit ihren beiden Schenkeln in zwei Schlitze der Welle 20' geschoben. Auf der dem feststehenden Hohlrad 11 zugewandten Seite der Scheibe 34 ist eine bügelförmige Klammer 36 angeordnet, welche mit zwei Schenkeln von der Außenseite der Antriebshülse 14 her durch zwei radiale Bohrungen in derselben gesteckt ist, an der Welle 20' anliegt und durch zwei weitere radiale Bohrungen in der Antriebshülse 14 wieder auf deren Außenseite geführt ist. Die Klammer 36 sichert die Antriebshülse 14 in axialer Richtung. Auf der der Freischalthülse 16 zugewandten Seite der Scheibe 34 ist zwischen der Scheibe 34 und der Freischalthülse 16 eine vorgespannte Druckfeder 38 angeordnet.

Der Getriebebeschlag 1 ist so ausgebildet, daß mittels der Antriebshülse 14 das abtriebsseitige Hohlrad 28 relativ zu dem feststehenden Hohlrad 11 verdrehbar ist, um im Ausführungsbeispiel den Neigungseinsteller des Fahrzeugsitzes 3 zu betätigen. Hierzu wird, beispielsweise manuell über das erwähnte Handrad, die Antriebshülse 14 um ihre Achse gedreht. Dabei wird die Freischalthülse 16 mittels der Steuerkurven über einen begrenzten Drehwinkel hinweg ein Stück weit axial nach innen entgegen der Kraft der Druckfeder 38 gedrückt und im übrigen in Umfangsrichtung mitgenommen. Der bis dahin belastete Zuganker 30 wird dadurch entlastet, und die Druckfeder 38 abgekoppelt. Die Freischalthülse 16 dreht den Exzenter 20, welcher über die Ritzel-Lagerscheibe 22 das Ritzel 24 dreht. Das Ritzel 24 läuft im feststehenden Hohlrad 11 um. Das drehbar auf der Hohlrad-Lagerscheibe 26 gelagerte abtriebsseitige Hohlrad 28 steht an einer Stelle seiner Innenverzahnung in Eingriff mit dem Ritzel 24 und dreht sich daher aufgrund des umlaufenden Ritzels 24, wobei ein ausreichendes Spiel an den Zahnflanken vorgesehen ist. Die Mantelflächen der beiden Lagerscheiben 22 und 26 wirken als Drehgelenk. Für eine Bedienung, welche der Benutzervorstellung entgegenkommt, ist die Zähneanzahl im Getriebebeschlag 1 so gewählt, daß das erwähnte, antreibende Handrad und das abtriebsseitige Hohlrad 28 den gleichen Drehsinn bei ihrer Bewegung aufweisen.

Zum Übergang in den gesperrten Zustand des Getriebebeschlags 1 wird das Drehmoment von der Antriebshülse 14 genommen. Die Druckfeder 38 als Energiespeicher für den Spielausgleich drückt die Freischalthülse 16 axial nach außen zur Stirnwand der Antriebshülse 14. Über den Schnellbefestiger 32 zieht die Freischalthülse 16 am Zuganker 30, der dann wieder belastet ist. Der Zuganker 30 drückt über den Teller an seinem anderen Ende auf die Hohlrad-Lagerscheibe 26. Der axial auf die Hohlrad-Lagerscheibe 26 wirkende Druck wird durch die Geometrie des Keiles 26' und der Schräge 22' teilweise in einen Druck umgewandelt, der in radialer Richtung auf die Ritzel-Lagerscheibe 22 wirkt. Die beiden Lagerscheiben 22 und 26, zwischen deren Stirnflächen in axialer Richtung ein kleines Spiel vorhanden ist, wirken als Keilschiebeeinrichtung zur Erzeugung einer Spielfreiheit in radialer Richtung.

Die Ritzel-Lagerscheibe 22 drückt nämlich radial nach außen (in Richtung der Exzentrizität des Exzenters 20) auf das Ritzel 24, welches sich in dieser Richtung bereits in Eingriff mit der Innenverzahnung des feststehenden Hohlrades 11 befindet. Soweit ein Spiel zwischen der Verzahnung des Ritzels 24 und der Innenverzahnung des feststehenden Hohlrades 11 besteht, wird dieses durch eine kleine radiale Verschiebung der Ritzel-Lagerscheibe 22 und des Ritzels 24 beseitigt. Umgekehrt bewirkt der Druck des Keiles 26' auf die Schräge 22' der Ritzel-Lagerscheibe 22 eine Reaktionskraft, infolge derer die Hohlrad-Lagerscheibe 26 sich in radialer Richtung entgegen dem Ritzel 24 verschiebt. Da die Hohlrad-Lagerscheibe 26 am radial entgegengesetzten Ende das abtriebsseitige Hohlrad 28 mitnimmt, bewegt sich dieses mit seiner Innenverzahnung auf das Ritzel 24 zu, so daß auch zwischen diesen Teilen das Spiel beseitigt wird.

### Bezugszeichenliste

- 1: Getriebebeschlag
- 3: Fahrzeugsitz
- 5: Sitzrahmen
- 6: Stange
- 8: Sitzschale
- 11: feststehendes Hohlrad
- 14: Antriebshülse
- 16: Freischalthülse
- 20: Exzenter
- 20': Welle
- 20": Exzenterpartie
- 20"': Lagerpartie
- 22: Ritzel-Lagerscheibe
- 22': Schräge
- 24: Ritzel
- 26: Hohlrad-Lagerscheibe
- 26': Keil
- 28: abtriebsseitiges Hohlrad
- 30: Zuganker
- 32: Schnellbefestiger
- 34: Scheibe
- 36: Klammer
- 38: Druckfeder

## Patentansprüche

1. Getriebebeschlag für einen Fahrzeugsitzeinsteller mit wenigstens zwei axial angeordneten, relativ zueinander verdrehbaren Hohlrädern (11, 28) als Zentralräder, wenigstens einem axial zwischen den Hohlrädem (11, 28) angeordneten, umlaufenden Planetenrad (24), und in radial unterschiedliche Richtungen wirkende Mittel (22, 26), die in einem gesperrten Zustand des Getriebebeschlags (1) ein radiales Spiel beseitigen, **dadurch gekennzeichnet, dass** die Mittel (22, 26) eine Keilschiebeeinrichtung mit zwei axial nebeneinander angeordnete Lagerscheiben (22, 26) aufweisen, von denen eine Lagerscheibe (26) dem einen der Hohlräder (28) und die andere Lagerscheibe (22) dem Planetenrad (24) zugeordnet ist, wobei die eine Lagerscheibe (26) einen Keil (26') und die andere Lagerscheibe (22) eine passende Schräge (22') aufweist, wodurch die Keilschiebeinrichtung im Falle einer Aktivierung eine axiale Kraft in eine radiale Kraft und eine axiale Verschiebung in eine radiale Verschiebung umwandelt.

2. Getriebebeschlag nach Anspruch 1, **dadurch gekennzeichnet, dass** die Mittel (22, 26) in radial entgegengesetzten Richtungen wirken.

3. Getriebebeschlag nach Anspruch 1 oder 2, **dadurch gekennzeichnet, dass** die Mittel (22, 26) zwischen dem Planetenrad (24) und jeweils einem der beiden Hohlräder (11, 28) zugleich das radiale Spiel beseitigen.

4. Getriebebeschlag nach einem der Ansprüche 1 bis 3, **dadurch gekennzeichnet, dass** die Mittel (22, 26) als Drehschiebegelenk ausgebildet sind, wobei die äußeren Mantelflächen der Lagerscheiben (22,26) das Drehgelenk bilden.

5. Getriebebeschlag nach einem der Ansprüche 1 bis 4, **dadurch gekennzeichnet, dass** ein Energiespeicher (38) zur Bewegung der Mittel (22, 26) vorgesehen ist.

6. Getriebebeschlag nach Anspruch 5, **dadurch gekennzeichnet, dass** der Energiespeicher (38) abkoppelbar ist, wobei im Antrieb (14, 16) Steuerkurven zum Abkoppeln des Energiespeichers (38) vorgesehen sind.

7. Getriebebeschlag nach Anspruch 6, **dadurch gekennzeichnet, dass** die Steuerkurven an zwei relativ zueinander verdrehbaren und axial verschiebbaren Hülsen (14, 16) ausgebildet sind.

8. Fahrzeugsitz, insbesondere Kraftfahrzeugsitz, mit einem Getriebebeschlag (1) nach einem der Ansprüche 1 bis 7.

## Claims

1. A gear fitting for a vehicle seat adjuster, with at least two axially arranged ring gears (11, 28) which are rotatable relative to one another and form central gears, at least one rotating planet gear (24) arranged axially between the ring gears (11, 28), and means (22, 26) which act in radially different directions and eliminate radial play in a locked state of the gear fitting (1), **characterised in that** the means (22, 26) have a wedge-type sliding arrangement with two bearing discs (22, 26) which are arranged axially side by side and of which one bearing disc (26) is associated with one of the ring gears (28), and the other bearing disc (22) is associated with the planet gear (24), wherein the one bearing disc (26) has a wedge (26') and the other bearing disc (22) has a mating chamfer (22'), whereby the wedge-type sliding arrangement, when activated, converts an axial force into a radial force and axial displacement into radial displacement.

2. A gear fitting according to claim 1, **characterised in that** the means (22, 26) act in radially opposite directions.

3. A gear fitting according to claim 1 or 2, **characterised in that** the means (22, 26) simultaneously eliminate the radial play between the planet gear (24) and a respective one of the two ring gears (11, 28).

4. A gear fitting according to any one of claims 1 to 3, **characterised in that** the means (22, 26) are formed as a rotary sliding joint, wherein the outer casing surfaces of the bearing discs (22, 26) form the rotary joint.

5. A gear fitting according to any one of claims 1 to 4, **characterised in that** an energy store (38) is provided for moving the means (22, 26).

6. A gear fitting according to claim 5, **characterised in that** the energy store (38) can be disengaged, wherein control cams for disengaging the energy store (38) are provided in the drive (14, 16).

7. A gear fitting according to claim 6, **characterised in that** the control cams are formed on two sleeves (14, 16) which are rotatable relative to one another and are axially displaceable.

8. A vehicle seat, especially a motor vehicle seat, with a gear fitting (1) according to any one of claims 1 to 7.

## Revendications

1. - Armature d'entraînement pour un dispositif de réglage de siège de véhicule, comportant au moins deux roues à denture intérieure (11, 28) disposées axialement, aptes à tourner l'une par rapport à l'autre, en tant que planétaires, au moins une roue planétaire (24) tournante, disposée axialement entre les roues à denture intérieure (11, 28), et des moyens (22, 26) agissant dans des directions radialement différentes qui, dans un état bloqué de l'armature d'entraînement (1) corrigent un jeu radial, **caractérisée par le fait que** les moyens (22, 26) présentent un dispositif de verrouillage à clavette, avec deux rondelles de palier (22, 26) disposées axialement l'une à côté de l'autre, dont une rondelle de palier (26) est associée à l'une (28) des roues à denture intérieure et l'autre rondelle de palier (22), à la roue planétaire (24), une rondelle de palier (26) présentant une clavette (26') et l'autre rondelle de palier (22), une inclinaison adaptée (22'), ce par quoi le dispositif de verrouillage à clavette dans le cas d'une activation convertit une force axiale en une force radiale et un déplacement axial en un déplacement radial.

2. - Armature d'entraînement selon la revendication 1, **caractérisée par le fait que** les moyens (22, 26) agissent dans des directions radialement opposées.

3. - Armature d'entraînement selon l'une des revendications 1 ou 2, **caractérisée par le fait que** les moyens (22, 26) corrigent le jeu radial en même temps entre la roue planétaire (24) et respectivement l'une des deux roues à denture intérieure (11, 28).

4. - Armature d'entraînement selon l'une des revendications 1 à 3, **caractérisée par le fait que** les moyens (22, 26) sont réalisés sous la forme d'une articulation de verrouillage tournante, les surfaces d'enveloppe externes des rondelles de palier (22, 26) formant l'articulation tournante.

5. - Armature d'entraînement selon l'une des revendications 1 à 4, **caractérisée par le fait qu'**un réservoir d'énergie (38) est prévu pour le déplacement des moyens (22, 26).

6. - Armature d'entraînement selon la revendication 5, **caractérisée par le fait que** le réservoir d'énergie (38) est désaccouplable, à l'occasion de quoi, dans l'entraînement (14, 16), des cames de commande sont prévues pour le désaccouplement du réservoir d'énergie (38).

7. - Armature d'entraînement selon la revendication 6, **caractérisée par le fait que** les cames de commande sont formées sur deux douilles (14, 16) aptes à tourner l'une par rapport à l'autre et déplaçables axialement.

8. - Siège de véhicule, en particulier siège de véhicule automobile, comportant une armature d'entraînement (1) telle que définie à l'une des revendications 1 à 7.
